# EUROPÄISCHE PATENTSCHRIFT

(11) **EP 2 740 971 B1**
(45) Veröffentlichungstag und Bekanntmachung des Hinweises auf die Patenterteilung: **08.04.2015**
(21) Anmeldenummer: 13194798.8
(22) Anmeldetag: 28.11.2013
(51) Int. Cl.: F16H 57/04

(54) **Schmiereinrichtung für eine rotierende Mutter eines Kugelgewindetriebs und Kugelgewindetrieb**
Lubricating device for a rotating nut of a ball screw drive and ball screw drive
Dispositif de lubrification pour un écrou rotatif d'une vis d'entraînement à billes et vis d'entraînement à billes

(30) Priorität: 04.12.2012 DE 102012222238
(43) Veröffentlichungstag der Anmeldung: 11.06.2014
(73) Patentinhaber: August Steinmeyer GmbH & Co. KG, 72458 Albstadt (DE)
(72) Erfinder: Weinert, Andreas, 72488 Sigmaringen (DE)
(74) Vertreter: DREISS Patentanwälte PartG mbB

(56) Entgegenhaltungen:
- EP-A1- 1 637 774
- EP-A2- 1 233 200
- DE-A1-102004 043 749
- DE-A1-102009 023 984

## Beschreibung

Kugelgewindetriebe umfassend eine Spindel und eine Mutter sowie eine Vielzahl umlaufender meist kugelförmiger Wälzkörper sind seit Jahrzehnten aus dem Stand der Technik bekannt. Sie werden vor allem im Werkzeugmaschinenbau als sehr präzise, leistungsfähige und langlebige Linearantriebe eingesetzt.

Üblicherweise ist die Mutter des Kugelgewindetriebs drehfest an einem Schlitten einer Werkzeugmaschine befestigt und die Spindel ist drehbar gelagert an dem Maschinenbett angeordnet.

Die Gewindespindel wird über einen elektrischen Antrieb in Drehung versetzt und auf diese Weise eine Linearbewegung des Schlittens erreicht.

Vor allem bei langen Kugelgewindetrieben mit einer Spindellänge von beispielsweise 5 m und einem Spindeldurchmesser von 80 mm, ist das Rotationsträgheitsmoment dieser Gewindespindel beträchtlich und limitiert die Dynamik des Antriebs beziehungsweise des Kugelgewindetriebs. Demgegenüber hat die Mutter, weil sie sehr viel kürzer baut, ein sehr viel geringeres Gewicht und ein sehr viel geringeres Rotationsträgheitsmoment.
Um die Dynamik vor allem großer Kugelgewindetriebe zu erhöhen, ist es daher erstrebenswert, die Mutter in Rotation zu versetzen und die Gewindespindel drehtest anzuordnen. Solch ein Kugelgewindetrieb ist aus der gattungsgemäßen EP 1 637 774 A1 bekannt. Um die dich drehende Mutter zu schmieren, ist ein Adapter drehbar an der Mutter befestigt und versorgt über einen Kanal die Mutter mit Schmierstoff. Wegen der Fliehkräfte wird ein Großteil des Schmierstoffs nach außen geschleudert und gelangt nicht auf die Spindel und die Wälzkörper.
Ähnliches gilt auch für die EP 1 233 200 A2 und die DE 10 2004 043 749 A1.
Die Umsetzung dieser kinematischen Umkehr ist bislang daran gescheitert, dass es nicht gelungen ist, eine zuverlässige Versorgung mit Schmierstoff der Wälzkörper und deren Laufflächen auf der Gewindespindel und in der Mutter sicherzustellen. Eine ungenügende Schmierung der Wälzkörper führt zu Schäden am Kugelgewindetrieb und ist daher nicht hinnehmbar.

Der Erfindung liegt die Aufgabe zu Grunde, eine Schmiereinrichtung für eine rotierende Mutter eines Kugelgewindetriebs bereitzustellen, welche eine zuverlässige Versorgung der Wälzkörper und der Laufflächen des Kugelgewindetriebs ermöglicht.

Diese Aufgabe wird erfindungsgemäß gelöst durch eine Vorrichtung zur Versorgung eines Kugelgewindetriebs mit Schmiermittel umfassend einen Innenring, einen Außenring und eine Schmiermittelleitung, wobei der Innenring an einer Mutter des Kugelgewindetriebs befestigt ist, wobei der Außenring drehbar an dem Innenring gelagert ist, und wobei die Schmiermittelleitung fluidisch mit einem vom Außenring begrenzten Innenraum in Verbindung steht.

Durch diesen Innenraum, der von dem feststehenden Außenring radial begrenzt wird, ist es möglich, Schmiermittel in unmittelbarer Nähe bzw. direkt auf die Spindel des Kugelgewindetriebs zu bringen, obwohl die Mutter des Kugelgewindetriebs drehbar an der Betätigung in Drehung versetzt wird. Somit ist es möglich, unabhängig von der Drehzahl der Mutter des Kugelgewindetriebs und den daraus resultierenden Zentrifugalkräften das Schmiermittel in unmittelbare Nähe oder direkt auf die Spindel des Kugelgewindetriebs aufzubringen.

Weil die Gewindespindel drehfest angeordnet ist, wird das Schmiermittel nicht wieder von der Gewindespindel heruntergeschleudert, sondern kann dort verbleiben bis die Mutter und die in ihr umlaufenden Kugeln in den mit Schmiermittel versorgten Bereich der Gewindespindel gelangen. Dort nehmen sie das Schmiermittel auf und verteilen es gleichmäßig über die Kugeln und auch in das Innere der Mutter. Um eine noch bessere Benetzung der Gewindespindel mit dem in den Innenraum angebrachten Schmiermittel zu erreichen, ist vorgesehen, dass die Vorrichtung Mittel zum Verteilen des Schmiermittels umfasst.

Um eine robuste Lagerung des Außenrings auf dem Innenring zu ermöglichen ist vorgesehen, dass der Innenring den Innenraum in axialer Richtung durchdringt und dort mindestens einen Durchbruch aufweist, sodass das in den Innenraum eingebrachte Schmiermittel durch diesen mindestens einen Durchbruch auf die Gewindespindel gelangen kann.

Selbstverständlich kann der Außenring auch fliegend auf dem Innenring gelagert werden, sodass es nicht zwingend erforderlich ist, dass der Innenring den Innenraum in axialer Richtung durchdringt. Dadurch kann das Schmiermittel vom Innenraum direkt auf die Gewindespindel gelangen.

Solche Mittel zum Verteilen des Schmiermittels können mindestens ein an dem Innenring drehbar gelagertes Ritzel oder Rad sein, das bzw. die bspw. über eine an dem Außenring ausgebildete Innenverzahnung angetrieben werden. Dadurch erreichen die Ritzel eine Drehzahl, die sehr viel größer ist als die Drehzahl der Mutter des Kugelgewindetriebs.

In praktischen Versuchen haben sich Drehzahlen von bis zu 10.000 / min als möglich erwiesen. Bei diesen hohen Drehzahlen wird jeder Tropfen des Schmiermittels der auf die Außenverzahnung eines Ritzels gelangt, nach außen geschleudert und gelangt dadurch entweder direkt auf die Gewindespindel oder ein anderes benachbart angeordnetes Ritzel. Dort wiederholt sich dieser Vorgang von neuem, sodass in jeden Fall ein wesentlicher Teil des in den Innenraum geförderten Schmiermittels direkt oder indirekt auf der Gewindespindel landet.

Eine alternative Ausgestaltung der Mittel zum Verteilen des Schmiermittels umfassend einen Zwischenring, der an seinem Innendurchmesser eine Nut aufweist, wobei der Zwischenring an dem Innenring befestigt ist und somit die Drehung des Innenrings bzw. der Mutter mitmacht. Des Weiteren ist vorgesehen, dass die Schmiermittelleitung direkt oder durch eine Radialbohrung in dem Außenring und/oder durch einen Kanal verlängert vor der Nut endet.

Die Schmiermittelleitung bzw. der Kanal endet in eingebautem Zustand des Außenrings bevorzugt an dem geodätisch höchsten Punkt des Außenrings, sodass das aus der Schmiermittelleitung bzw. durch den Kanal austretende Schmiermittel von der Schwerkraft unterstützt nach unten auf die darunter befindliche Gewindespindel fällt oder tropft.

Der Teil des Schmiermittels, der nicht direkt auf die Gewindespindel tropft, wird im unteren Teil der Nut des Innenrings gesammelt und durch dessen Drehbewegungen nach oben befördert.

Sobald der Innenring z.B. bei einem Stillstand der Mutter oder eine Drehrichtungsumkehr der Mutter mindestens kurzzeitig zum Stillstand gelangt, tropft das in der Nut befindliche Schmiermittel zumindest sofern es sich oberhalb der Gewindespindel befindet nach unten auf die Gewindespindel und bewirkt dort die gewünschte Schmierung.

Alternativ oder zusätzlich ist es auch möglich, dass in die Schmiermittelleitung eine steuerbare Druckluftleitung mündet, und dass die zwischen der Einmündung der Druckluftleitung in die Schmiermittelleitung und dem Innenraum befindliche Schmiermittelmenge durch Öffnen der unter Druck stehenden Druckluftleitung in den Innenraum geblasen wird und dabei mindestens ein Teil des Schmiermittels direkt auf die Gewindespindel auftrifft.

Damit ein hochdynamisches Einblasen des Schmiermittels möglich ist, ist eine ausreichend dimensionierte Entlüftung des Innenraums vorzusehen. Dabei soll natürlich sichergestellt sein, dass durch die Entlüftung nicht ungewollter Weise Schmiermittel in die Umgebung entweichen kann.

Um ein Verdrehen des Außenrings zu verhindern, ist an dem Außenring eine Drehmomentstütze vorhanden, die sich bspw. an einem Maschinentisch oder einem anderen Bauteil abstützt.

Um sicherzustellen, dass der Außenring gut gelagert ist, kann zu beiden Seiten des Innenraums jeweils ein Lager zur Lagerung des Außenrings auf dem Innenring angeordnet sein. Alternativ ist natürlich auch eine fliegende Lagerung des Außenrings auf dem Innenring möglich.

Die eingangs genannte Aufgabe wird auch gelöst durch einen Kugelgewindetrieb nach dem nebengeordneten Anspruch 14 sowohl durch die Verfahrensansprüche 14 und 15 und das Steuergerät gemäß dem Anspruch 16.

Weitere Vorteile und vorteilhafte Ausgestaltungen der Erfindung sind der nachfolgenden Zeichnung, deren Beschreibung und den Patentansprüchen entnehmbar.

### Zeichnung

Es zeigen:
- Figur 1: einen Längsschnitt durch ein erstes Ausführungsbeispiel einer erfindungsgemäßen Schmiereinrichtung in Explosionsdarstellung,
- Figur 2: eine isometrische Darstellung des ersten Ausführungsbeispiels,
- Figur 3: ein Längsschnitt durch das erste Ausführungsbeispiel in montiertem Zustand,
- Figur 4: eine Ansicht von vorne auf das erste Ausführungsbeispiel,
- Figur 5: einen Längsschnitt durch ein zweites Ausführungsbeispiel in Explosionsdarstellung,
- Figur 6: eine Isometrie des zweiten Ausführungsbeispiels in Explosionsdarstellung,
- Figur 7: ein Längsschnitt durch das zweite Ausführungsbeispiel in zusammengebautem Zustand,
- Figur 8: einen Längsschnitt durch ein drittes Ausführungsbeispiel in Explosionsdarstellung,
- Figur 9: eine isometrische Darstellung des dritten Ausführungsbeispiels,
- Figur 10: einen Längsschnitt durch das dritte Ausführungsbeispiel in zusammengebautem Zustand und
- Figur 11: eine Variante des ersten Ausführungsbeispiels im Längsschnitt.

### Beschreibung der Ausführungsbeispiele

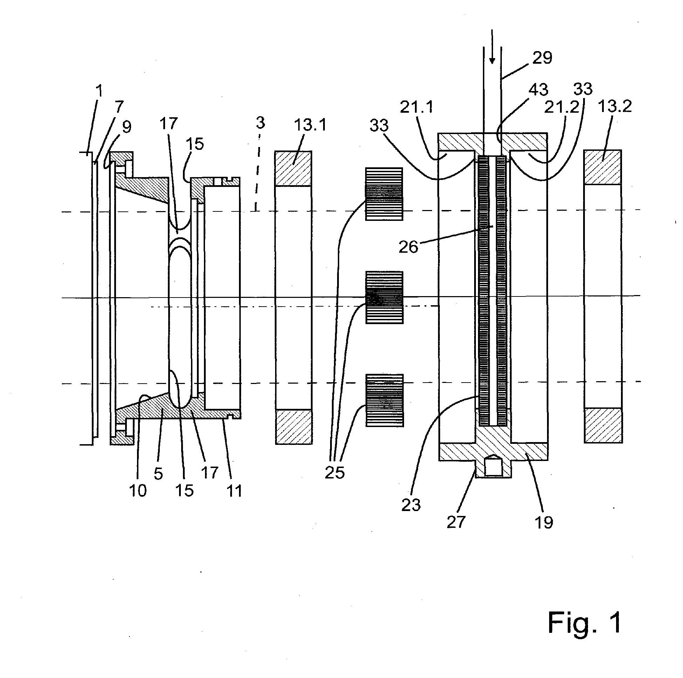

In der Figur 1 ist ein erstes Ausführungsbeispiel einer erfindungsgemäßen Schmiereinrichtung im Längsschnitt und als Explosionsdarstellung dargestellt.

Die Mutter 1 des Kugelgewindetriebs ist auf eine Gewindespindel 3 montiert, die in der Figur 1 waagerecht verläuft.

Das Zusammenwirken der Mutter 1 mit der Gewindespindel 3 ist dem einschlägigen Fachmann bekannt und wird daher nicht näher erläutert. Auch sind die in der Regel kugelförmigen Wälzkörper zwischen Mutter 1 und Gewindespindel 3 und andere konstruktive Details nicht dargestellt.

Eine Besonderheit weist der Kugelgewindetrieb umfassend die Mutter 1 und die Gewindespindel 3 auf: Die Gewindespindel 3, deren Außenkontur als gestrichelte Linie angedeutet ist, ist vorzugsweise drehfest angeordnet. Die Wälzkörper zwischen Mutter 1 und Gewindespindel 3 sind nicht dargestellt. Bei dem dargestellten Ausführungsbeispiel ist die Gewindespindel 3 drehfest beispielsweise an einem Maschinenbett (nicht dargestellt) befestigt, während die Mutter 1 über einen Drehantrieb (ebenfalls nicht dargestellt) in Drehung versetzt werden kann. Die Mutter 1 kann dann an einem Schlitten einer Maschine angeordnet sein, so dass sich aus dem Zusammenwirken der drehangetriebenen Mutter 1 und der drehfesten Gewindespindel 3 eine Linearbewegung des nicht dargestellten Schlittens ergibt.

Um die Lebensdauer und Leistungsfähigkeit des Kugelgewindetriebs, umfassend die Mutter 1 und die Gewindespindel 3, auf Dauer zu erhalten und sicherzustellen, ist es erforderlich, dass ein Schmierstoff, beispielsweise Fett von Zeit zu Zeit aufgebracht wird, um den Kugelgewindetrieb und insbesondere die Wälzkörper und deren Laufbahnen in der Muttern und in der Kugelgewindespindel 3 zu schmieren.

Problematisch ist bei Kugelgewindetrieben mit umlaufender beziehungsweise rotierender Mutter 1, dass die dabei entstehenden Zentrifugalkräfte den Schmierstoff, welcher nachfolgend der Einfachheit halber als Fett bezeichnet wird, obwohl auch flüssige Schmierstoffe und Festschmierstoffe eingesetzt werden können, nach außen geschleudert wird und somit die Gewindespindel 3 nicht erreichen.

In der Figur 1 ist ein erstes Ausführungsbeispiel einer erfindungsgemäßen Schmiereinrichtung im Längsschnitt und in Explosionsdarstellung dargestellt. Rechts neben der Mutter 1 ist ein Innenring 5 vorhanden, der an die Mutter 1 angeflanscht wird. Zu diesem Zweck ist an der Mutter 1 ein Bund 7 ausgebildet, der mit einem entsprechend gestalteten Einpass 9 am Innenring zusammenwirkt. Innenring 5 und Mutter 1 werden dann über nicht dargestellte Schrauben miteinander verbunden. Die Zentrierung erfolgt über den Bund 7 und den Einpass 9 in an sich bekannter Weise. Dies bedeutet wiederum, dass der Innenring 5 die Drehbewegung der Mutter 1 mitmacht.

Der Innendurchmesser des Innenrings 5 ist als Konus 10 ausgebildet, der sich zu der Mutter 1 hin aufweitet. Dadurch wird erreicht, dass Schmiermittel, welches auf den Konus 10 gelangt ist, von den während der Drehung des Innenrings 5 auftretenden Zentrifugalkräften in Richtung der Mutter 1 gefördert wird. Somit gelangt zumindest ein Teil des Schmierstoffs auf diesem Wege dorthin wo die Schmierung benötigt wird, nämlich an die Kontaktpunkte zwischen Wälzkörpern einerseits und den Laufflächen in der Mutter 1 und der Gewindespindel 3 andererseits.

Dieses Konstruktionsprinzip kann bei allen drei nachfolgend beschriebenen Ausführungsbeispielen unterstützend eingesetzt werden. Es ist jedoch in manchen Anwendungen schon allein ausreichend, um eine ausreichende Schmierung von den Wälzkörpern und den Laufflächen in der Mutter 1 und der Gewindespindel 3 zu gewährleisten. Daher wird auch Schutz für dieses Prinzip alleine beansprucht.
Der Innenring 5 weist eine Durchgangsbohrung (ohne Bezugszeichen) auf, deren Durchmesser selbstverständlich größer ist als der Außendurchmesser der Gewindespindel.
Der Innenring 5 weist einen zylindrischen Außendurchmesser auf, der als Lagersitz 11 für zwei Wälzlager 13.1 und 13.2 dient. In axialer Richtung etwa in der Mitte des Lagersitzes 11 sind mehrere Durchbrüche 15 über den Umfang des Innenrings 5 verteilt angeordnet. Diese Durchbrüche 15 sollen so groß wie möglich sein, damit Fett von außen durch die Durchbrüche 15 nach innen zu der Gewindespindel 3 transportiert werden kann. Allerdings müssen zwischen den Durchbrüchen 15 Stege 17 stehen bleiben, welche für den "Zusammenhalt" des Lagersitzes 11 sorgen, so dass beide Wälzlager 13.1 und 13.2 auf dem Lagersitz 11 montiert werden können.

Zwischen den Wälzlagern 13.1 und 13.2 ist ein Außenring 19 angeordnet. Der Außenring 19 weist zwei Lagersitze 21.1 und 21.2 auf, die mit dem Außendurchmesser der Lager 13.1 und 13.2 zusammenwirken. Zwischen den Lagersitzen 21.1 und 21.2 ist an dem Außenring 19 eine Innenverzahnung 23 ausgebildet. Diese Innenverzahnung 23 dient dazu, mehrere über den Umfang verteilte Ritzel 25 anzutreiben. Der Antrieb der Ritzel 25 erfolgt ähnlich wie bei einem Planetengetriebe, wobei die Innenverzahnung 23 - um in der Terminologie eines konventionellen Planetengetriebes zu bleiben - das Hohlrad darstellt, während die Ritzel 25 die Planetenräder sind. Ein Sonnenrad, wie es bei herkömmlichen Planetengetrieben vorhanden ist, fehlt bei der erfindungsgemäßen Schmiereinrichtung.

Die Ritzel 25 sind in dem Innenring 5 auf einem Zapfen (nicht dargestellt) in Figur 1 im Bereich der Durchbrüche 15 drehbar gelagert. Dies bedeutet, dass die Ritzel 25 die Drehbewegung der Mutter 1 beziehungsweise des Innenrings 5 beim Betrieb der erfindungsgemäßen Schmiereinrichtung mitmachen.

Der Außenring 19 macht diese Drehbewegung nicht mit, weil er über eine Drehmomentstütze 27 gegen Verdrehen gesichert ist. Ein Widerlager gegen das sich die Drehmomentstütze 27 abstützt, ist in Figur 1 nicht dargestellt. Es kann sich dabei um eine Nut im Maschinenbett oder eine andere Form eines Widerlagers handeln.

Die Ritzel 25 kämmen mit der Innenverzahnung 23, so dass immer dann wenn der Innenring 5 eine Drehung ausführt, die Ritzel 25 um ihre Drehachse eine Drehung ausführen, wobei die Drehzahl der Ritzel 25 sehr viel größer ist als die Drehzahl des Innenrings 5. Dies ist der Tatsache geschuldet, dass die Zähnezahl der Innenverzahnung 23 sehr viel größer ist als die Zähnezahl der Ritzel 25. Aus dem Verhältnis der Zähnezahl der Innenverzahnung 23 und der Zähnezahl der Ritzel 25 lässt sich das Übersetzungsverhältnis zwischen der Drehzahl des Innenrings 5 und der Drehzahl der Ritzel 25 ermitteln.

Dies bedeutet im Ergebnis, dass bei jeder Drehung des Innenrings 5 sich auch die Ritzel 25 drehen, wenn auch mit höherer Drehzahl.

Alternativ ist auch eine kinematische Umkehr möglich. Dann sind die Ritzel 25 an dem Außenring 19 drehbar gelagert und werden von einer am Innenring 5 angeordneten Verzahnung angetrieben.

In Figur 1 ist auf der entgegengesetzten Seite der Drehmomentstütze 27 eine Schmiermittelleitung 29 schematisch angedeutet. Durch diese Schmiermittelleitung 29 wird das Schmiermittel bei Bedarf, beispielsweise durch eine Pumpe oder eine Fettpresse ins Innere (siehe den Innenraum 26) des Außenrings 19 und auf die Ritzel 25 gepresst. Durch die hohe Drehzahl der Ritzel 25 nehmen die Zähne der Ritzel 25 dieses Fett auf und schleudern es umher.

Zumindest ein Teil des Fetts wird dadurch auf die Gewindespindel 3 geschleudert. Durch diese Art der Schmierung gelangt in jedem Fall eine ausreichende Menge Fett auf die Gewindespindel 3. Dieses Fett bleibt auf der Gewindespindel 3 haften, weil sich die Gewindespindel 3 nicht dreht. Beim nächsten Überfahren der mit Fett versorgten Stelle der Gewindespindel 3 durch die Mutter 1 beziehungsweise die darin enthaltenen Wälzkörper (nicht dargestellt) werden diese geschmiert und verteilen das Fett über die gesamte Länge der Gewindespindel 3.

Weil der Innenraum des Außenrings 29 in montiertem Zustand relativ klein ist, gelangt das über die Schmiermittelleitung 29 zugeführte Fett zwingend auf eines oder mehrere der Ritzel 25, welche dieses dann früher oder später auf die Gewindespindel 3 schleudern. Denn selbst wenn ein Teil des Fetts, welches zum ersten Mal auf einem Ritzel 25 auftrifft, nicht direkt auf die Gewindespindel 3 geschleudert wird, dann trifft es vielleicht das nächste Ritzel 25, welches dieses Fett dann in einem "zweiten Versuch" auf die Gewindespindel 3 schleudert.

Auf Grund der Vielzahl der montierten Ritzel 25, des geringen Volumens des Innenraums 26 und der hohen Drehzahl der Ritzel 25 ist zuverlässig gewährleistet, dass das über die Schmiermittelleitung 29 zugeführte Fett auch tatsächlich früher oder später die Gewindespindel 3 erreicht.

Ein weiterer Vorteil der erfindungsgemäßen Schmiereinrichtung ist darin zu sehen, dass nicht der gesamte Innenraum des Außenrings 19 mit Fett gefüllt ist, sondern große Teile davon Luft enthalten, so dass die Reibung zwischen dem Außenring 19, und der Kugelgewindespindel 3 auf Grund des Schmierstoffs sehr gering ist. Dadurch wird eine unerwünschte Erwärmung des Schmierstoffs mit den sich daraus ergebenden Folgen für die Viskosität und die Lebensdauer des Schmierstoffs vermieden. Außerdem wird der Antriebsleistungsbedarf gering gehalten.

In der Figur 1 ist eine Drehachse des mittleren Ritzels 25 durch eine strichpunktierte Linie ohne Bezugszeichen angedeutet und bis in den Durchbruch 15 des Innenrings 5 verlängert. Dort wird das Ritzel 25 über einen Zapfen (nicht dargestellt) drehbar gelagert.

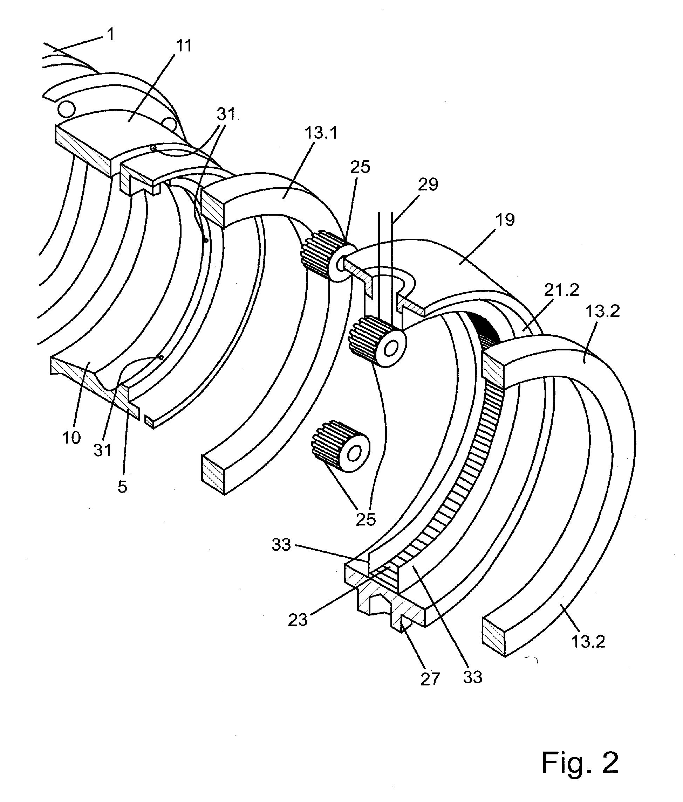

Die Figur 2 zeigt nun eine isometrische Explosionsdarstellung des ersten Ausführungsbeispiels. Gleiche Bauteile werden mit den gleichen Bezugszeichen versehen und es gilt das bezüglich der anderen Figuren Gesagte entsprechend.

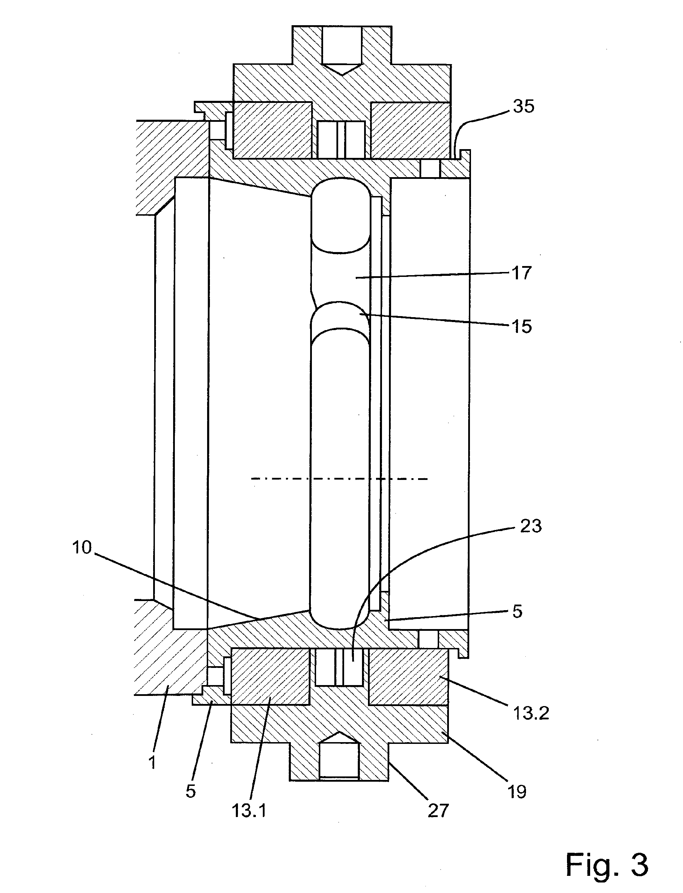

In der Figur 2 kann man in dem Innenring 3 Aufnahmebohrungen 31 erkennen, die zur Aufnahme eines Lagerzapfens (nicht dargestellt) für die drei dargestellten Ritzel 25 dienen. Aus Gründen der Übersichtlichkeit ist in der Figur 2 die Gewindespindel 3 nicht dargestellt. Gut zu erkennen ist in dieser Darstellung, dass rechts und links der Innenverzahnung 23 an dem Außenring 19 zwei umlaufende kreisringförmige Begrenzungswände 33 ausgebildet sind, die dafür sorgen, dass das Fett, welches durch die Schmiermittelleitung 29 in das Innere des Außenrings 19 gefördert wird, auf die Ritzel 25 gelangen und nicht seitlich entweichen kann. In der Figur 3 ist ein Längsschnitt des ersten Ausführungsbeispiels in zusammengebautem Zustand dargestellt.

In dieser Darstellung wird deutlich, dass die Ritzel 25 im Bereich der Durchbrüche 15 aufgenommen sind. Die Details der Lagerung sind in diesem Längsschnitt ebenfalls nicht zu erkennen.

In der Figur 3 ist auch zu erkennen, dass an dem rechten Ende des Lagersitzes 11 eine Nut 35 eingestochen ist, in die ein nicht dargestellter Seeger-Ring eingesetzt wird, um den Außenring 19 mit den Lagern 13 in axialer Richtung auf dem Innenring 5 beziehungsweise dem Lagersitz 11 des Innenrings 5 zu fixieren. Aus Gründen der Übersichtlichkeit sind nicht alle Bauteile mit Bezugszeichen versehen.

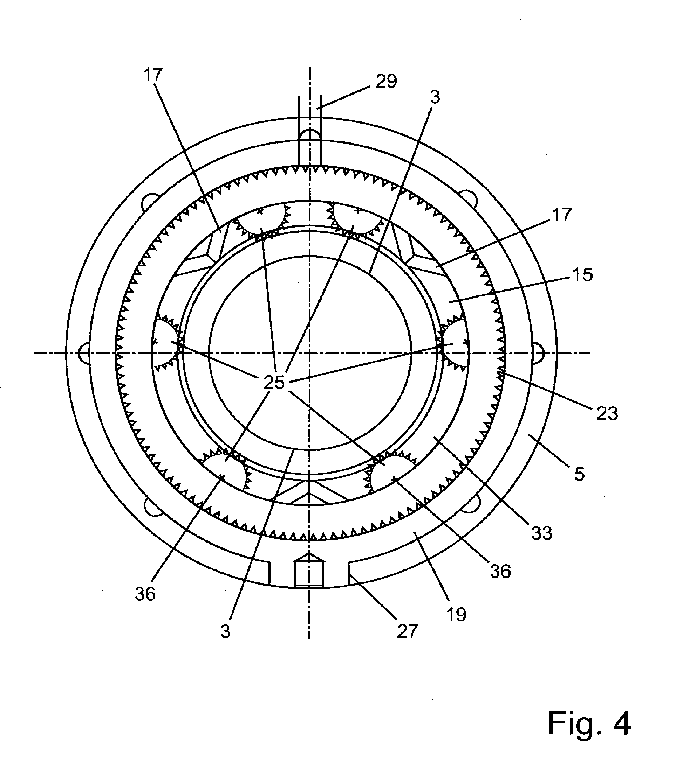

Die Figur 4 zeigt eine Ansicht von rechts auf das erste Ausführungsbeispiel. In dieser Ansicht ist gut zu erkennen, dass die Ritzel 25 über einen Zapfen 36 im Lagerinnenring gelagert sind. Des Weiteren ist zu erkennen, dass die Stege 17 relativ filigran ausgeführt sind und die Durchbrüche 15 entsprechend groß sind. Auch ist die vordere Begrenzungswand 33 des Außenrings 19 gut zu erkennen.

Weil die Ritzel 25, anders als bei einem herkömmlichen Planetengetriebe, kein nennenswertes Drehmoment übertragen müssen und auch die Innenverzahnung 23 nur dazu dient, die Ritzel 25 in Drehung zu versetzen, ohne dabei ein nennenswertes Drehmoment zu übertragen, können sowohl der Innenring 19 mit seiner Innenverzahnung 23 als auch die Ritzel 25 aus Kunststoff gefertigt werden. Dabei hat sich das sogenannte Lasersintern als eine besonders vorteilhafte, weil kostengünstige und produktionstechnisch gut beherrschbare Herstellungsmethode erwiesen. Die dabei erzielbaren Genauigkeiten sind völlig ausreichend.

Auch kann der gesamte Innenring 5 durch Lasersintern aus Kunststoff hergestellt werden. Die dabei erzielbaren Genauigkeiten reichen aus, um den Lagersitz 11 und den Einpass 9 herzustellen. Bei Bedarf können diese Funktionsflächen anschließend auch überdreht werden und damit die gewünschte Präzision erreicht werden. Dies ist jedoch in aller Regel nicht erforderlich.

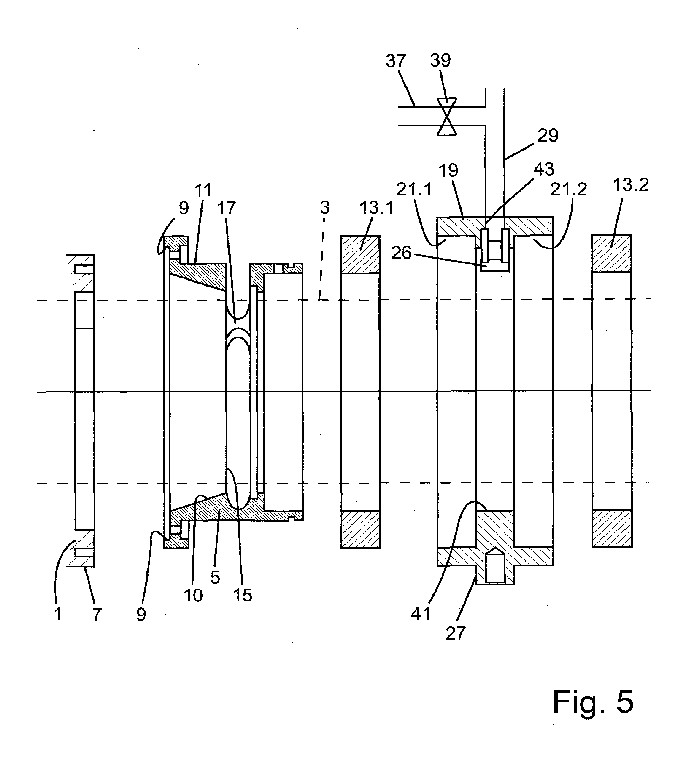

In den Figuren 5 bis 7 wird ein weiteres, gegenüber dem ersten Ausführungsbeispiel etwas vereinfachtes Ausführungsbeispiel dargestellt. Gleiche Bauteile werden mit den gleichen Bezugszeichen versehen und es gilt das bezüglich der anderen Figuren Gesagte entsprechend.

Bei diesem Ausführungsbeispiel fehlen gegenüber dem ersten Ausführungsbeispiel die Innenverzahnung 23 und die Ritzel 25. Dies bedeutet, dass das Fett über die Schmiermittelleitung 29 direkt in den Innenraum 26 gefördert wird. Dort würde das Fett bleiben. Um zu gewährleisten, dass dieses von einer Fettpumpe (nicht dargestellt) in den Innenraum des Außenrings 19 geförderte Fett auch tatsächlich die Gewindespindel 3 erreicht, mündet in die Schmiermittelleitung 29 eine Druckluftleitung 37. Wenn nun eine vorgegebene Menge Fett in den Innenraum gefördert wurde, wird über die Druckluftleitung 37 Luft in die Schmiermittelleitung 29 eingeblasen was dazu führt, dass das Fett in dem Bereich zwischen der Einmündung der Druckluftleitung 37, und dem Innenraum des Außenrings 19 durch die Druckluft in den Innenraum gepresst wird und dort versprüht wird. Dabei gelangt mindestens ein Teil des Fetts auf die Gewindespindel 3.

Dieses konstruktiv sehr einfache Ausführungsbeispiel erfordert eine sehr einfache Steuerung von der Schmiermittelpumpe (nicht dargestellt) und einem Ventil 39 in der Druckluftleitung der Gestalt, dass zunächst eine gewisse Menge Schmiermittel von der Pumpe gefördert wird und anschließend diese Schmiermittelmenge durch Öffnen des Ventils 39 in der Druckluftleitung 37 in den Innenraum des Außenrings 19 geblasen wird. Dabei ist es in aller Regel vorteilhaft, wenn durch Öffnen des Ventils 39 ein Druckluftstoß in die Schmiermittelleitung 29 gelangt, um ein dynamisches Verteilen und Einblasen des Schmiermittels in den Innenraum des Außenrings 19 und damit auf die Gewindespindel 3 zu erreichen. Der eventuell im Bereich der Schmiermittelleitung 29 anhaftende Schmierstoff wird, weil die Schmiermittelleitung 29 oben an dem Außenring 19 an diesen angeschlossen ist, auch schwerkraftunterstützt nach unten, das heißt auf die Gewindespindel 3 fallen. Dabei ist zu berücksichtigen, dass sich der Außenring 9 wegen der Drehmomentstütze 27 nicht dreht und daher dort keine Fliehkräfte auftreten.

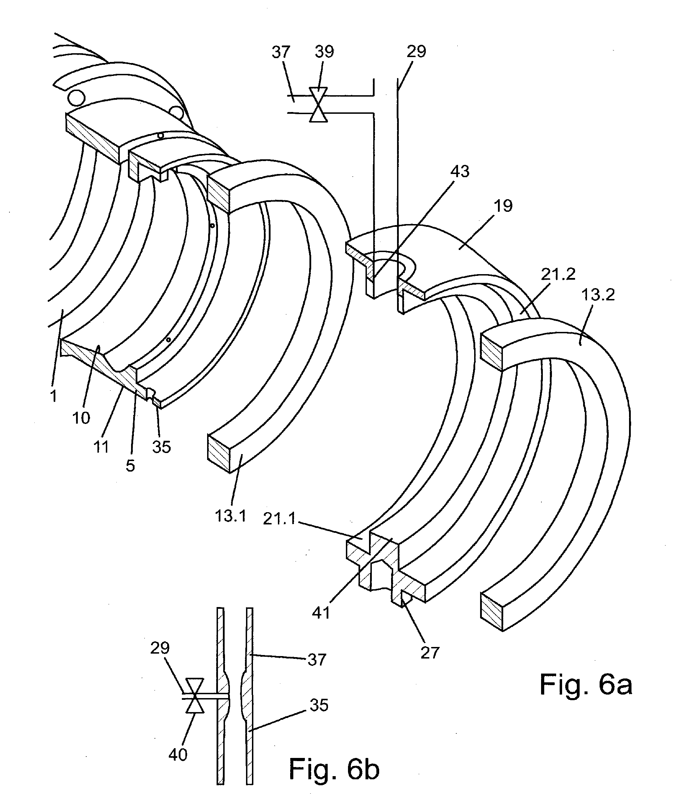

Wie sich aus der Figur 6a gut erkennen lässt, ist an dem Außenring 19 im Bereich zwischen den Lagersitzen 21.1 und 21.2 ein breiter Ring 41 ausgebildet, der das Volumen im Inneren des Außenrings 19 vermindert, so dass das über die Schmiermittelleitung 29 mit Hilfe der Druckluftleitung 37 eingeblasene Schmiermittel zwangsweise durch die Durchbrüche 15 des Innenrings 5 auf die in Figur 6 nicht dargestellte Gewindespindel 3 gelangt.

Es versteht sich von selbst, dass immer dort wo die Schmiermitteleitung 29 in den Außenring 19 mündet, eine Radialbohrung 43 im Außenring 19 ausgebildet ist, welche die Verbindung zwischen dem Innenraum des Außenrings 19 und der Schmiermittelleitung 19 herstellt.
Alternativ ist es auch möglich, in der Druckluftleitung 37 eine Venturi-Düse 35 anzuordnen. In die Venturi-Düse 35 mündet die Schmiermittelleitung 29 (Siehe die Figur 6b). Wenn nun unter Druck stehende Luft durch die Druckluftleitung 37 strömt, reißt die Luft in der Venturi-Düse 35 Schmiermittel aus der dort angeschlossenen Schmiermittelleitung 29 mit und fördert es in den Innenraum 26 des Außenrings 19.

Auch bei dieser Alternative ist die Steuerung sehr einfach: Immer dann, wenn Luft durch die Druckluftleitung 37 strömt, wird ein Ventil 40 in der Schmiermittelleitung 29 geöffnet, so dass Schmiermittel in die Venturi-Düse 35 angesaugt und dort zerstäubt werden kann.

Beide Alternativen sind gleichermaßen wirksam und effizient, so dass der Anwender die Wahl hat und zum Beispiel abhängig von der Viskosität des Schmiermittels eine Auswahl treffen kann. Dabei eignet sich die Zerstäubung des Schmiermittels in der Venturi-Düse 35 eher für niedrig-viskose Schmiermittel.

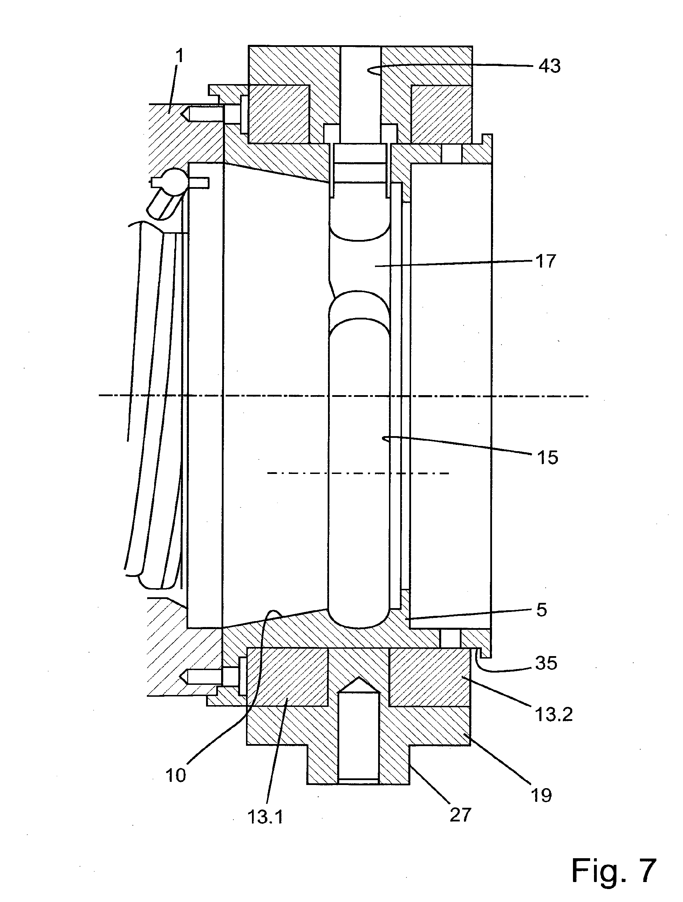

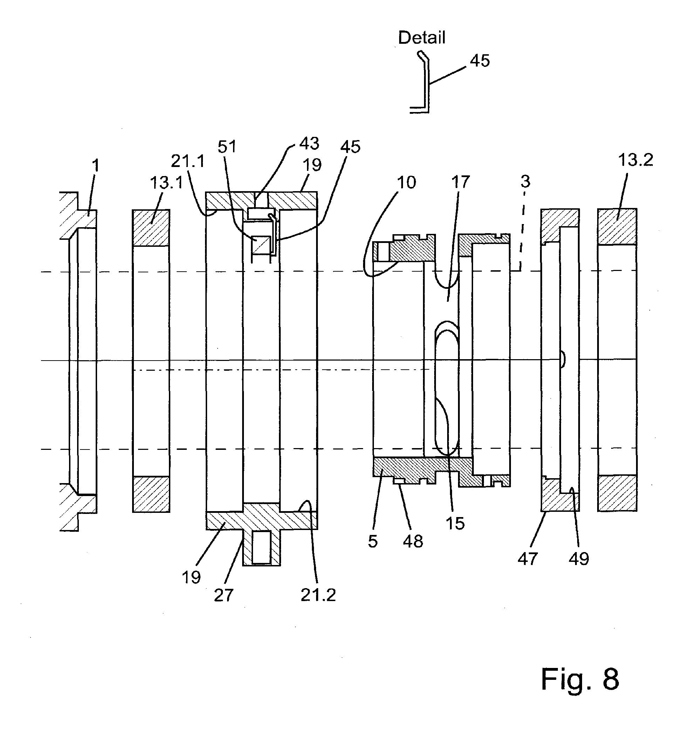

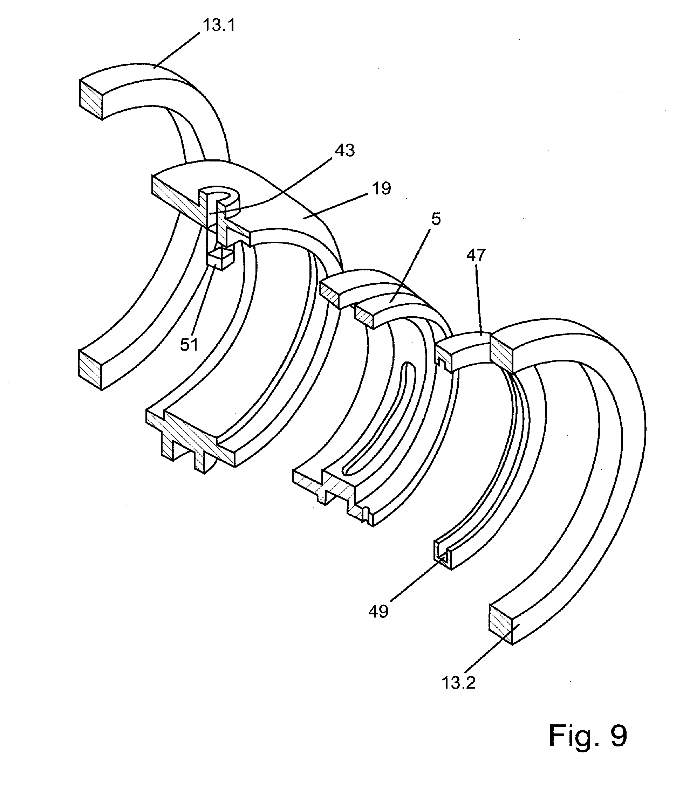

In der Figur 7 ist das zweite Ausführungsbeispiel geschnitten in zusammengebautem Zustand dargestellt. In den Figuren 8 bis 10 ist ein drittes Ausführungsbeispiel einer erfindungsgemäßen Schmiereinrichtung in Explosionsdarstellung und in zusammengebautem Zustand dargestellt.

Bei dem dritten Ausführungsbeispiel gemäß den Figuren 8 bis 10 wird der durch die Radialbohrung 43 zugeführte Schmierstoff über einen Kanal 45 weiter radial nach innen geführt. Der Kanal 45 ist als Detail etwas vergrößert dargestellt. In dieser vergrößerten Darstellung wird deutlich, dass der Kanal 45 einen schrägen Abschnitt, einen daran anschließenden radial nach innen verlaufenden Abschnitt und anschließend einen abgewinkelten Abschnitt aufweist, der in erster Näherung parallel zu einer Drehachse der Gewindespindel (nicht dargestellt) bzw. zu einer Längsachse der Schmiereinrichtung verläuft.

Zwischen den Lagern 13 ist ein Zwischenring 47 angeordnet, der an seinem Innendurchmesser eine Nut 49 aufweist, die gewissermaßen ein Sammelvolumen für Schmierstoff darstellt.

An dem Kanal 45 ist ein Abstreifer 51, beispielsweise in Form eines schräggestellten Blechs, angeordnet. Dieser Abstreifer 51 streift das in der Nut 49 vorhandene Schmiermittel ab, so dass es nach unten auf die Gewindespindel 3 fällt.

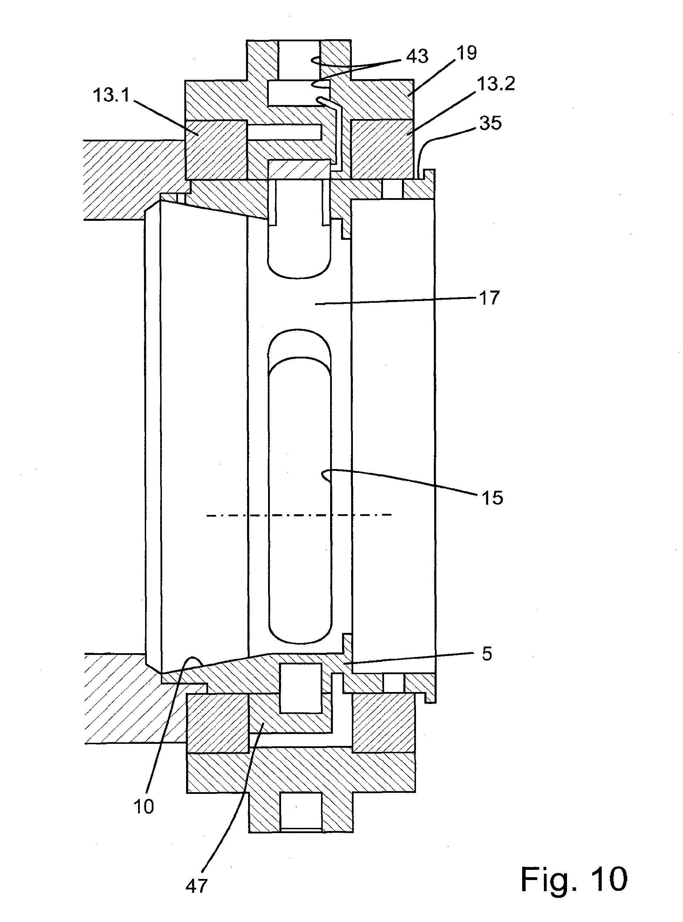

Wie sich vor allem aus der Figur 10 erkennen lässt, ist das abgewinkelte Ende des Kanals 45 so positioniert, dass das austretende Fett in die Nut 49 gelangen kann.

Der Zwischenring 47 und mit ihm die Nut 49 sind an ihrem Innendurchmesser drehfest an dem Innenring 47 aufgenommen und machen demzufolge die Drehbewegung des Innenrings 5 mit.

Wenn nun also von Zeit zu Zeit eine geringe Menge Schmiermittel über die Schmiermittelleitung 29, die Radialbohrung 43 und den Kanal 45 in das Innere des Außenrings 19 eingebracht wird, dann tropft dieser Schmierstoff entweder direkt wegen der auf ihn wirkenden Schwerkraft nach unten, das heißt in diesem Fall in Richtung der Gewindespindel und schmiert diese. Wenn dies nicht erfolgt, dann sammelt sich zumindest einen Teil des Schmierstoffs unten in der Nut 49 und wird durch anschließende Drehbewegungen des Zwischenrings 47 teilweise nach oben befördert.

Von dort tropft das Schmiermittel im Laufe der Zeit nach unten auf die Gewindespindel 3 und zwar immer dann, wenn sich der Innenring 5 und der Zwischenring 47 nicht drehen. Aus diesem Grund ist es bei diesem Ausführungsbeispiel besonders vorteilhaft, wenn das Schmiermittel an dem höchsten Punkt des Außenrings 19 eingebracht wird. In diesem Fall ist die Gewindespindel 3 tiefer angeordnet und die auf den Schmierstoff wirkende Schwerkraft bringt zumindest einen Teil des Schmiermittels auf die Gewindespindel 3.

Auch bei diesem Ausführungsbeispiel ist es wichtig, dass an dem Innenring 5 Durchbrüche 15 vorhanden sind, welche es erlauben, dass das Schmiermittel auf die Gewindespindel 3 gelangen kann.

Wenn nun die Drehrichtung der Mutter 1 beziehungsweise des Innenrings 5 geändert wird oder der Kugelgewindetrieb nicht aktiv ist, dann wirkt lediglich die Schwerkraft auf das in der Nutz 49 befindliche Schmiermittel und das im oberen Teil der Nut 49 befindliche Schmiermittel kann durch die Durchbrüche 15 hindurch nach unten auf die Gewindespindel 3 fallen. Dies wird von dem Abstreifer 51 unterstützt.

Weil solche kurze Stillstandszeiten beziehungsweise Drehrichtungsumkehrungen bei einem leistungsfähigen Kugelgewindetrieb sehr häufig vorkommen, ist somit in relativ kurzen Zeitabständen eine kleine Menge Schmiermittel von oben auf die Gewindespindel 3 und sorgt somit für eine ausreichende und zuverlässige Schmierung des Schleuderrings. Ist sichergestellt, dass immer eine gewisse Menge des Schmiermittels oberhalb der Gewindespindel 3 befindet und somit bei einer Stillstandsphase nach unten auf die Gewindespindel 3 abtropfen kann.

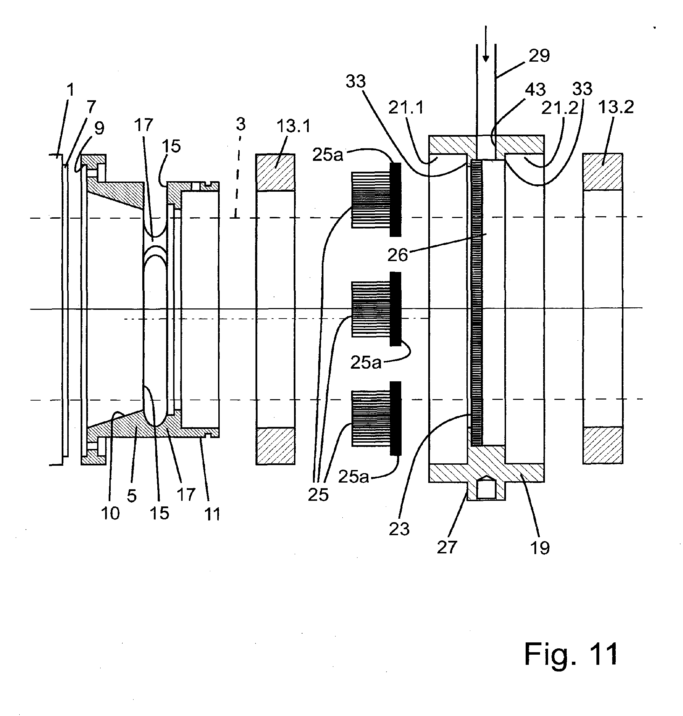

Die Figur 11 stellt eine Variante des ersten Ausführungsbeispiels dar bei der an den Ritzeln 25 ein Bürstenabschnitt 25a vorgesehen ist, der zumindest einen Teil des Schmierstoffs auf die Gewindespindel 3 aufträgt. Den anderen Teil verteilen die Bürsten 25a der Ritzel 25 fliehkraftunterstützt im Innenraum 26.

Eine weitere nicht dargestellte Variante sieht vor, dass im Innenraum 26 eine oder mehrere Kapillaren angeordnet sind, die den Schmierstoff von der Schmiermittelleitung 29 bzw. der Bohrung 43 auf die Gewindespindel 3 fördert. Ein Ende der Kapillaren kann auf der Gewindespindel 3 aufliegen. Die Kapillaren können als dünne flexible Röhrchen aus Kunststoff oder Metall oder als Schlauch ausgebildet sein. In diesem Fall ist der Außenring 19 fliegend an dem Innenring 5 gelagert.

## Patentansprüche

1. Vorrichtung zur Versorgung eines Kugelgewindetriebs (KGT) mit Schmiermittel umfassend einen Innenring (5), einen Außenring (19) und eine Schmiermittelleitung (29), wobei der Innenring (5) an einer Mutter (1) des Kugelgewindetriebs (KGT) befestigt ist, wobei der Außenring (19) drehbar an dem Innenring (5) gelagert ist, wobei die Schmiermittelleitung (29) fluidisch mit einem von dem Außenring (19) begrenzten Innenraum (26) in Verbindung steht, **dadurch gekennzeichnet, dass** die Vorrichtung Mittel zum Verteilen des in dem Innenraum Schmiermittels eingebrachten umfasst.

2. Vorrichtung nach Anspruch 1, **dadurch gekennzeichnet, dass** der Innenring (5) den Innenraum (26) durchdringt und dort mindestens einen Durchbruch (15) aufweist.

3. Vorrichtung nach Anspruch 1 oder 2, **dadurch gekennzeichnet, dass** eine zentrale Bohrung des Innenrings (5) mindestens bereichsweise als Konus (10) oder Kegelstumpf ausgebildet ist.

4. Vorrichtung nach einem der vorhergehenden Ansprüche, **dadurch gekennzeichnet, dass** die Mittel zum Verteilen des Schmiermittels mindestens ein an dem Innenring (5) drehbar gelagertes Ritzel (25) oder Rad umfassen.

5. Vorrichtung nach einem der vorhergehenden Ansprüche, **dadurch gekennzeichnet, dass** die Mittel zum Verteilen des Schmiermittels eine an dem Außenring (19) ausgebildete Innenverzahnung (23) umfassen, und dass die Innenverzahnung (23) mit einer Außenverzahnung des mindestens einen Ritzels (25) kämmt.

6. Vorrichtung nach einem der vorhergehenden Ansprüche, **dadurch gekennzeichnet, dass** die Mittel zum Verteilen des Schmiermittels einen Zwischenring (47) umfassen, dass der Zwischenring (47) an seinem Innendurchmesser eine Nut (48) aufweist, dass der Zwischenring (47) an dem Innenring befestigt oder ein Teil des Innenrings (5) ist, und dass die Schmiermittelleitung (29) direkt oder durch eine Radialbohrung (43) und/oder einen Kanal (45) verlängert vor der Nut (48) endet.

7. Vorrichtung nach einem der vorhergehenden Ansprüche, **dadurch gekennzeichnet, dass** die Mittel zum Verteilen des Schmiermittels eine oder mehrere Bürsten, bevorzugt drehbar gelagerte und angetriebene Bürsten, umfassn, und dass die mindestens eine Bürste den Schmierstoff vom Innenraum (26) auf eine Spindel (3) des Kugelgewindetriebs fördert.

8. Vorrichtung nach einem der vorhergehenden Ansprüche, **dadurch gekennzeichnet, dass** in die Schmiermittelleitung (29) eine steuerbare Druckluftleitung (37) mündet.

9. Vorrichtung nach Anspruch 8, **dadurch gekennzeichnet, dass** in der Druckluftleitung (37) ein Wegeventil (39) und/oder eine Venturi-Düse (35) angeordnet ist.

10. Vorrichtung nach Anspruch 8 oder 9, **dadurch gekennzeichnet, dass** in der Schmiermittelleitung (29) ein Wegeventil (40) angeordnet ist.

11. Vorrichtung nach einem der vorhergehenden Ansprüche, **dadurch gekennzeichnet, dass** an dem Außenring (19) eine Drehmomentstütze (27) vorhanden ist.

12. Vorrichtung nach einem der vorhergehenden Ansprüche, **dadurch gekennzeichnet, dass** zu beiden Seiten des Innenraums (26) jeweils ein Lager (13) zur Lagerung des Außenrings (19) auf dem Innenring (5) angeordnet ist.

13. Kugelgewindetrieb mit einer Mutter (1) und einer Gewindespindel (3), wobei die Mutter (1) mindestens mittelbar an einer ersten Baugruppe drehbar gelagert ist und drehantreibbar ist, und wobei die Gewindespindel (3) mindestens mittelbar an einer zweiten Baugruppe drehfest angeordnet ist, **dadurch gekennzeichnet, dass** an der Mutter (1) eine Vorrichtung nach einem der vorhergehenden Ansprüche angeordnet ist.

14. Verfahren zum Betreiben einer Vorrichtung gemäß den Ansprüchen 8 bis 10, umfassend die Verfahrensschritte
- Fördern einer vorgebbaren Menge von Schmiermittel durch die Schmiermittelleitung (29) und
- Anschließendes Einblasen des zuvor geförderten Schmiermittels in den Innenraum (26) durch ein mindestens kurzzeitiges Öffnen eines unter Druck stehenden Teils der Druckluftleitung (37).

15. Verfahren zum Betreiben einer Vorrichtung gemäß den Ansprüchen 8 bis 10, umfassend die Verfahrensschritte
- Öffnen und/oder Fördern einer vorgebbaren Menge von Schmiermittel durch die Schmiermittelleitung (29) und
- Gleichzeitiges Einblasen von unter Druck stehender Luft durch die Druckluftleitung (37).

16. Steuergerät für eine Vorrichtung zur Versorgung eines Kugelgewindetriebs (KGT) mit Schmiermittel, **dadurch gekennzeichnet, dass** es nach einem der Verfahren gemäß Anspruch 14 oder 15 arbeitet.

## Claims

1. Apparatus for supplying a ball screw drive with lubricant comprising an inner ring (5), an outer ring (19) and a lubricant line (29), wherein the inner ring (5) is fixed to a nut (1) of the ball screw drive, wherein the outer ring (19) is mounted rotatably on the inner ring (5), wherein the lubricant line (29) is connected fluidly with an inner space (26) limited by the outer ring (19), **characterised in that** the apparatus comprises a means for distributing the lubricant introduced into the inner space.

2. Apparatus according to claim 1, **characterised in that** the inner ring (5) penetrates the inner space (26) and possesses at least one opening (15) at that point.

3. Apparatus according to claim 1 or 2, **characterised in that** a central bore of the inner ring (5) is, at least in regions, formed as a cone (10) or truncated cone.

4. Apparatus according to one of the preceding claims, **characterised in that** the means for distributing the lubricant comprise at least one pinion (25) or wheel rotatably mounted on the inner ring (5).

5. Apparatus according to one of the preceding claims, **characterised in that** the means for distributing the lubricant comprise inner gear teeth (23) formed on the outer ring (19), and that the inner gear teeth (23) engage with outer gear teeth of the at least one pinion (25).

6. Apparatus according to one of the preceding claims, **characterised in that** the means for distributing the lubricant comprise an intermediate ring (47), that the intermediate ring (47) has a groove (48) on its inner diameter, that the intermediate ring (47) is fixed to the inner ring or a part of the inner ring (5), and that the lubricant line (29) ends, directly or extended by means of a radial bore (43) and/or a channel (45), before the groove (48).

7. Apparatus according to one of the preceding claims, **characterised in that** the means for distributing the lubricant comprise one or more brushes, preferably rotatably mounted and driven brushes, and that the at least one brush conveys the lubricant from the inner space (26) to a spindle (3) of the ball screw drive.

8. Apparatus according to one of the preceding claims, **characterised in that** a controllable compressed air line (37) opens into in the lubricant line (29).

9. Apparatus according to claim 8, **characterised in that** a distribution valve (39) and/or a venturi nozzle (35) is arranged in the compressed air line (37).

10. Apparatus according to claim 8 or 9, **characterised in that** a distribution valve (40) is arranged in the lubricant line (29).

11. Apparatus according to one of the preceding claims, **characterised in that** a torque support (27) is provided on the outer ring (19).

12. Apparatus according to one of the preceding claims, **characterised in that** a mount (13) is arranged on both sides of the inner space (26) in order to mount the outer ring (19) on the inner ring (5).

13. Ball screw drive with a nut (1) and a threaded spindle (3), wherein the nut (1) is at least indirectly rotatably mounted, so as to be driven in a rotary manner, on a first assembly, and wherein the threaded spindle (3) is at least indirectly mounted, non-rotatably, on a second assembly, **characterised in that** an apparatus according to one of the preceding claims is arranged on the nut (1).

14. Method for operating an apparatus according to claims 8 to 10, comprising the method steps
- delivery of a definable quantity of lubricant through the lubricant line (29) and
- subsequently blowing the previously delivered lubricant into the inner space (26) through an at least brief opening of a pressurised part of the compressed air line (37).

15. Method for operating an apparatus according to claims 8 to 10, comprising the method steps
- opening and/or delivering a definable quantity of lubricant through the lubricant line (29) and
- simultaneously blowing in pressurised air through the compressed air line (37).

16. Control device for an apparatus for supplying a ball screw drive with lubricant, **characterised in that** it functions according the method according to claim 14 or 15.

## Revendications

1. Dispositif d'alimentation en lubrifiant d'une vis d'entraînement à billes (KGT), comprenant une bague intérieure (5), une bague extérieure (19) et une conduite de lubrifiant (29), dans lequel la bague intérieure (5) peut être fixée sur un écrou (1) de la vis d'entraînement à billes (KGT), dans lequel la bague extérieure (19) est supportée en rotation sur la bague intérieure (5), dans lequel le conduit de lubrifiant (29) est en communication fluidique avec un espace intérieur (26) délimité de la bague extérieure (19), **caractérisé en ce que** le dispositif comporte des moyens pour distribuer le lubrifiant amené dans l'espace intérieur.

2. Dispositif selon la revendication 1, **caractérisé en ce que** la bague intérieure (5) pénètre dans l'espace intérieur (26), et y présente au moins une ouverture (15).

3. Dispositif selon la revendication 1 ou 2, **caractérisé en ce qu'**un alésage central de la bague intérieure (5) est réalisé au moins partiellement en forme de cône (10) ou de cône tronqué.

4. Dispositif selon l'une quelconque des revendications précédentes, **caractérisé en ce que** les moyens pour distribuer le lubrifiant comprennent au moins un pignon (25), ou une roue dentée, monté(e) de manière rotative sur la bague intérieure (5).

5. Dispositif selon l'une quelconque des revendications précédentes, **caractérisé en ce que** les moyens pour distribuer le lubrifiant comprennent une denture intérieure (23) réalisée sur la bague extérieure (19), et **en ce que** la denture intérieure (23) engrène avec une denture extérieure du au moins un pignon (25).

6. Dispositif selon l'une quelconque des revendications précédentes, **caractérisé en ce que** les moyens pour distribuer le lubrifiant comprennent une bague intermédiaire (47), la bague intermédiaire (47) présente une rainure (48) sur son diamètre intérieur, la bague intermédiaire (47) peut être fixée sur la bague intérieure, ou sur une partie de la bague intérieure (5), et **en ce que** le conduit de lubrifiant (29) se termine directement dans la rainure (48), ou passe à travers un alésage radial (43) et/ou un canal (45) s'étendant avant celle-ci.

7. Dispositif selon l'une quelconque des revendications précédentes, **caractérisé en ce que** les moyens pour distribuer le lubrifiant comprennent une ou plusieurs brosses, de préférence entraînées et supportées en rotation, et **en ce qu'**au moins une brosse transporte du lubrifiant à partir de l'espace intérieur (26) jusque sur une broche (3) de la vis d'entraînement à billes.

8. Dispositif selon l'une quelconque des revendications précédentes,, **caractérisé en ce qu'**un conduit d'air comprimé pouvant être commandé (37) débouche dans le conduit de lubrifiant (29)

9. Dispositif selon la revendication 8, **caractérisé en ce que** dans le conduit d'air comprimé (37) est disposé un distributeur (39) et/ou une buse à Venturi (35).

10. Dispositif selon la revendication 8 ou 9, **caractérisé en ce que** dans le conduit de lubrifiant (29) est disposé un distributeur (40).

11. Dispositif selon l'une quelconque des revendications précédentes, **caractérisé en ce qu'**un support de couple (27) est prévu sur la bague extérieure (19).

12. Dispositif selon l'une des revendications précédentes, **caractérisé en ce que** sur chacun des deux côtés de l'espace intérieur (26) est agencé un palier (13) pour supporter la bague extérieure (19) sur la bague intérieure (5).

13. Vis d'entraînement à billes ayant un écrou (1) et une broche filetée (3), dans laquelle l'écrou (1) est monté et peut être entraîné en rotation au moins indirectement sur un premier ensemble, et dans lequel la broche filetée (3) est agencée au moins indirectement solidaire en rotation sur un second ensemble, **caractérisé en ce qu'**un dispositif selon l'une quelconque des revendications précédentes est agencé sur l'écrou (1).

14. Procédé pour faire fonctionner un dispositif selon les revendications 8 à 10, comprenant les étapes consistant à
- transporter une quantité prédéterminée de lubrifiant à travers le conduit de lubrifiant (29), et
- injecter ensuite le lubrifiant fourni précédemment dans l'espace intérieur (26) à travers au moins une courte ouverture d'une partie sous pression du conduit d'air comprimé (37).

15. Procédé pour faire fonctionner un dispositif selon les revendications 8 à 10, comprenant les étapes consistant à
- ouvrir et/ou transporter une quantité prédéterminée de lubrifiant à travers le conduit de lubrifiant (29), et
- injecter en même temps de l'air sous pression à travers le conduit d'air comprimé (37).

16. Appareil de commande pour un dispositif d'alimentation en lubrifiant d'une vis d'entraînement à billes (KGT), **caractérisé en ce qu'**il fonctionne conformément à l'un des procédés selon la revendication 14 ou 15.
